# EUROPEAN PATENT APPLICATION

(11) **EP 2 394 542 A1**
(43) Date of publication of application: **14.12.2011**
(21) Application number: 11166604.6
(22) Date of filing: 18.05.2011
(51) Int. Cl.: A47J 37/12

(54) **Fryer for food products**

(30) Priority: 20.05.2010 IT VI20100145
(71) Applicant: Canol s.r.l., 36014 Santorso (VI) (IT)
(72) Inventor: Dalla Vecchia, Renata, 36014, Santorso (Vicenza) (IT)
(74) Representative: Bettello, Pietro

(57) **Abstract**

Herein described is a fryer for food products used in the food, pastry and baking industries to fry food products in particular pastry products in oil and with a continuous cycle. Such fryer is characterised in that the heating of the frying oil (K) is obtained by applying, onto the outer part of the base of the tank (1) containing the frying oil, an additional tank (2) containing diathermal oil (D), which is heated to a temperature such as to make a heat exchange by convection between the two tanks, bringing the entire mass of frying oil to the set temperature for optimal frying and keeping it constant for the entire duration of the frying.

## Description

The present finding regards a fryer for food products, according to the general part of claim 1.

Fryers are used in the food, pastry and baking industries to fry food products and pastry products in oil and with a continuous cycle.

As known to those operating in that sector, a successful frying depends, besides on the quality of the raw materials used, also and especially on the temperature of the frying oil, which must remain constant during the entire operation.

In the present state of the art, frying oil heating systems are substantially of three types:
- heating the frying oil by using armoured electrical resistors, which are immersed in the mass of the frying oil, heating it by convection;
- heating the frying oil by installing a boiler separated from the fryer, with a gas or liquid fuel burner, or using electrical resistors where said two systems (boiler or electrical resistor) provide for the heating of diathermal oil which, subsequently, is made to flow within a coil immersed in the frying oil, heating it.
- heating the frying oil by means of an open flame burner, fuelled by gas or liquid fuel; the flame and hot fumes produced by the burner are conveyed within pipes immersed in the frying oil or within channels positioned in the shallow recess of the frying tank, which heat them by radiation; subsequently said pipes or channels heat the frying oil by convection.

In practice, each of such systems has some operating drawbacks:
- electrical resistors: when they are operative they reach a temperature of 400-450°C, hence, given that there is a direct contact between the heating element and the frying oil, there occurs that, in proximity of the resistor, the oil tends to burn and the emulsified flour carbonises, altering the organoleptic properties of the frying oil; furthermore, such heating system is particularly expensive in countries where electrical power is produced at high costs;
- boiler with coils passed through by diathermal oil: this system allows optimally heating the frying oil, given that the coil in which the diathermal oil flows at the maximum temperature of 280°C allows providing a heating which keeps the qualities and characteristics of the frying oil intact. On the other hand, the disadvantage is the considerable cost of the heating system given that, besides purchasing an industrial boiler, it is necessary to install a power plant outside the laboratory as well as to install an expansion tank outside the laboratory; furthermore, it is necessary to provide a hydraulic system for conveying the hot diathermal oil in the area of operation of the fryer; due to all this, such heating method is convenient solely if combined with large industrial frying plants and with considerable production capacity;
- gas burner: this system has a low thermal efficiency and, additionally, in the areas licked by the flames, there arises the danger that the flours burn, altering the characteristics of the frying oil.

An object of the present invention is to provide a fryer for food products, provided with a system for heating frying oil, that is free of the drawbacks shown by similar machines of the known type.

Such object is attained by providing a fryer wherein the tank containing the frying oil is heated by a lower additional tank containing diathermal oil, said diathermal oil is in turn heated at such a temperature to be able to make a heat exchange between the two tanks so that it heats the frying oil by convection. The heating of the diathermal oil contained in the additional tank may take place by means of heat generators of various types, in particular through electrical resistor positioned in the mass of the diathermal oil or, preferably, by means of coils passed through by hot fumes which, being spread over the entire tank surface, homogeneously heat all the diathermal oil.

From a construction point of view, the additional tank has the same surface area as the overlying frying tank and the hot fumes are produced by one or more burners, applied directly onto the frame of the machine and connected to an end of the corresponding coil, whereas the other end of the coil enters into the fume discharge manifold (chimney).

The invention shall be better understood from the description of a possible embodiment thereof, provided solely by way of non-limiting example, with reference to the attached drawings wherein:

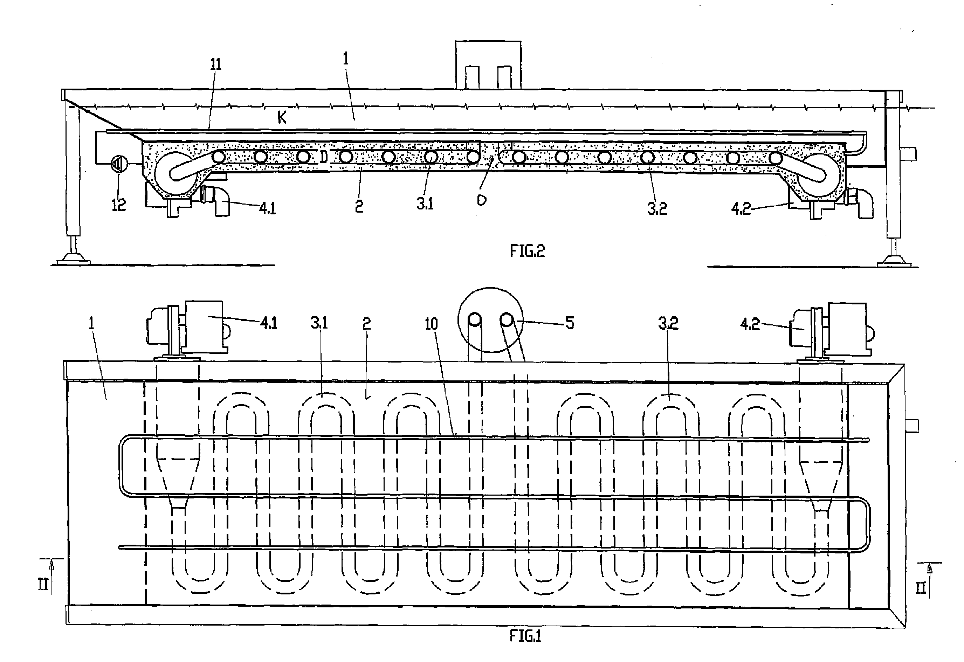

- fig 1 represents a plan view of the frying machine according to the invention;
- fig 2 represents the front elevation view of the abovementioned machine, sectioned according to the line II-II of fig 1.

As observable in the figures, the frying machine according to the invention provides that, beneath the tank 1, containing the food grade oil "K", there be applied a second tank 2 filled with diathermal oil "D"; said diathermal oil is heated through two coils 3.1 and 3.2 with hot fumes produced by the respective burners 4.1 and 4.2 passing through them, connected at one end thereof, whereas the other end of each coil discharges fumes into a single chimney 5. Operatively, the hot fumes that run through the two coils heat and keeps the mass of diathermal oil at a constant temperature, usually at a value of about 230-250°C, and the heat, through the bottom of the tank 1, heats by convection and keeps the frying oil at a constant temperature, usually at a value of about 180° C.

Furthermore, the invention provides for obtaining a secondary closed loop circuit 10, made up of ducts 11, positioned inside the tank 1 and passed through by the hot diathermal oil taken, through the pump 12, from the tank 2 and discharged into it; all this allows increasing the heat exchange between the two types of oil (diathermal/frying oil) thus increasing the thermal efficiency of the machine.

In practice, with the previously described heating system, some advantages are obtained, such as:
- a more uniform and homogeneous heating, due to the so-called "water-bath" method, which allows for a "milder" cooking thus obtaining a higher quality product;
- the cleaning operations of the upper tank 1 are easier;
- the frying oil lasts longer, in that the temperature difference between the heating diathermal oil and the heated frying oil is minimum, about 50-70°C, hence preventing the carbonisation of the "flours" and alteration of the characteristics of the frying oil;
- considerable energy saving.

The invention thus conceived can be subjected to modifications and variants and the construction and functional details thereof can be replaced by technically equivalent elements, provided that they all fall within the scope of inventive concept defined by the following claims.

## Claims

1. FRYER FOR FOOD PRODUCTS, used in the food, pastry and baking industries to fry food products and pastry products in oil and with a continuous cycle, said fryer being **characterised in that** the heating of the frying oil (K) is obtained by applying, onto the outer part of the base of the tank (1) containing the frying oil, an additional tank (2) containing diathermal oil (D), which is heated to a temperature such as to make a heat exchange by convection between the two tanks, bringing the entire mass of frying oil to the set temperature for optimal frying and keeping it constant for the entire duration of the frying.

2. FRYER FOR FOOD PRODUCTS, according to claim 1, **characterised in that** the additional tank (2) extends for the entire surface of the upper tank (1).

3. FRYER FOR FOOD PRODUCTS, according to claim 1, **characterised in that** the heating of the diathermal oil takes place through electrical resistors positioned inside the additional tank (2).

4. FRYER FOR FOOD PRODUCTS, according to claim 1, **characterised in that** the heating of the diathermal oil takes place through coils (3) with hot fumes running through them and immersed in the diathermal oil.

5. FRYER FOR FOOD PRODUCTS, according to claim 4, **characterised in that** the coils (3) are spread over the entire surface of the tank (2), heating the diathermal oil homogeneously.

6. FRYER FOR FOOD PRODUCTS, according to claim 4, **characterised in that** the hot fumes are produced by a burner (4), applied directly onto the frame of the machine and connected to en end of the coil (3), whereas the other end of said coil enters into the fume discharge manifold or chimney (5).

7. FRYER FOR FOOD PRODUCTS, according to one or more of the previous claims, **characterised in that** the diathermal oil is heated through a plurality of coils (3.1,3.2) with hot fumes produced by the respective burners (4.1,4.2) passing through them, connected at one end, whereas the other end of each coil discharges fumes into one or more chimneys (5).

8. FRYER FOR FOOD PRODUCTS, according to one or more of the previous claims, **characterised in that** it comprises a secondary closed loop circuit (10), made up of a plurality of ducts (11), positioned inside the tank (1) and passed through by the hot diathermal oil taken, through a pump (12), from the tank (2) and discharged into it.
